# EUROPÄISCHE PATENTSCHRIFT

(11) **EP 1 136 934 B1**
(45) Veröffentlichungstag und Bekanntmachung des Hinweises auf die Patenterteilung: **22.11.2006**
(21) Anmeldenummer: 00106220.7
(22) Anmeldetag: 22.03.2000
(51) Int. Cl.: G06K 7/00

(54) **Vorrichtung zum Empfangen digitaler Daten eines kontaktlos übertragenden Senders**
Device for receiving digital data from a wireless emitter
Appareil de réception de données provenant d'un émetteur sans contact

(43) Veröffentlichungstag der Anmeldung: 26.09.2001
(73) Patentinhaber: Infineon Technologies AG, 81541 München (DE)
(72) Erfinder: Schneckenburger, Christian, 85635 Höhenkirchen (DE)
(74) Vertreter: Epping - Hermann - Fischer

(56) Entgegenhaltungen:
- WO-A-98/52168
- FR-A- 2 764 758
- US-A- 5 712 630

## Beschreibung

Die Erfindung betrifft eine Vorrichtung zum Empfangen digitaler Daten eines kontaktlos übertragenden Senders mit einer analogen Empfangseinheit und einem der analogen Empfangseinheit nachgeschalteten Decoder.

Unter der Vorrichtung zum Empfangen digitaler Daten eines kontaktlos übertragenden Senders werden im folgenden auch solche Geräte verstanden, die an den Sender auch Daten übermitteln können. Der Gegenstand der Erfindung betrifft jedoch lediglich den Teil, der zum Empfangen der Daten notwendig ist, so daß auf die Sendeeinheit im folgenden nicht näher eingegangen wird.

Digitale Signale von kontaktlos übertragenden Sendern werden von der analogen Empfangseinheit einer derartigen Vorrichtung durch Filter, Verstärker und Entkopplungselemente stark verfälscht. Der der analogen Empfangseinheit nachgeschaltete Decoder kann diese digitalen Signale nur eingeschränkt und mit hohen Fehlerraten decodieren, da das Ursprungssignal in der analogen Empfangseinheit Verzögerungszeiten unterliegt. Gleichfalls kann das Originalsignal nach dem Durchlaufen der analogen Empfangseinheit Signalüberschwinger oder Dämpfungen enthalten. Als Sender kommen hierbei beispielsweise Chipkarten in Betracht, die ihre Daten und Energie über eine Antenne mit dem Schreib-/Lesegerät austauschen.

Die Eigenschaften der analogen Empfangseinheit müssen deshalb an die Eigenschaften des Senders angepaßt sein. Nur dann ist gewährleistet, daß der Decoder mit einer ausreichend hohen Sicherheit die digitalen Signale des Senders entschlüsseln kann. Die derzeit verwendeten Decoder können durch eine Änderung der Charakteristik des Decoders an das Verhalten der analogen Empfangseinheit angepaßt, d.h. kalibriert, werden, um mögliche Fehlerraten zu minimieren. Die Vorgehensweise derartiger Decoder beruht jedoch auf einem rein manuellen Anpassen der vorher bestimmten Parameter. Eine exakte Ermittlung der Parameter ist jedoch derzeit nicht möglich. Es kann lediglich geschätzt werden, ob sich die neu eingestellten Parameter günstiger oder negativer auf die Fehlerrate auswirken. Diese ermittelten Parameter werden dann in ein Register des Decoders geladen. Eine weitere Möglichkeit zur Anpassung des Decoders besteht darin, mittels Trimm-Potentiometer seine Charakteristik zu variieren.

Die Druckschrift WO 98/52168 zeigt eine Empfangsvorrichtung gemäß dem Oberbegriff des Anspruchs 1.

Die Verwendung unterschiedlicher Sender, zum Beispiel unterschiedlicher Kartentypen, zieht unterschiedliche Parameterwerte für einen oben beschriebenen Decoder nach sich. Soll ein Lesegerät für verschiedene Sendertypen ausgelegt werden, so kann der Decoder nur auf einen Mittelwert für alle Sendertypen eingestellt werden. Hierdurch wird jedoch nie das optimale Decodierergebnis erzielt.

Ein weiterer Nachteil der derzeit bekannten Lesegeräte besteht darin, daß jede analoge Empfangseinheit aufgrund von Bauelementstreuungen unterschiedliche Eigenschaften aufweist. Somit muß die Kalibrierung für jede Empfangseinheit separat vorgenommen werden.

Die Aufgabe der vorliegenden Erfindung besteht deshalb darin, eine Vorrichtung der oben genannten Art anzugeben, die die oben genannten Nachteile nicht aufweist. Ferner soll ein Verfahren angegeben werden, mit dem die vorstehend genannte Vorrichtung zum Empfangen digitaler Daten eines kontaktlos übertragenden Senders betrieben werden kann.

Die erfindungsgemäße Vorrichtung zum Empfangen digitaler Daten eines kontaktlos übertragenden Senders ist in Patentanspruch 1 beschrieben. Das erfindungsgemäße Verfahren ist in Patentanspruch 8 wiedergegeben.

Gemäß der Erfindung weist die Vorrichtung zum Empfangen digitaler Daten eines kontaktlos übertragenden Senders neben einer analogen Empfangseinheit und einem der analogen Empfangseinheit nachgeschalteten Decoder einen Signalformer zum Beaufschlagen der analogen Empfangseinheit mit einem Test-Signalverlauf und eine Kalibriereinheit auf, die abhängig von dem von der analogen Empfangseinheit erzeugten Signal Parameter bestimmt, mit denen der Decoder an die analoge Empfangseinheit und/oder den Sender anpaßbar ist.

Hierdurch wird eine automatische Kalibrierung des Lesegerätes auf die Eigenschaften der analogen Empfangseinheit sowie der Eigenschaften des verwendeten Senders möglich. Somit entfällt eine manuelle Anpassung des Decoders an die analoge Empfangseinheit. Das System ist nunmehr zudem in der Lage, auf veränderte Bedingungen, zum Beispiel neue Typen von Sendern oder auf veränderte Abstände des Senders zu der Vorrichtung zu reagieren. Die Kalibrierung wird "im Hintergrund" des Lesegerätes vorgenommen. Im wesentlichen kann auf die vorhandene Hardware zurückgegriffen werden. Ein weiterer Vorteil besteht darin, daß bei einem häufigen Auftreten von Fehlern die Erfindung eine selbständige Anpassung an die Parameter der analogen Empfangseinheit beziehungsweise des Senders übernimmt.

Die Erfindung wandelt somit ein Lesegerät für kontaktlos übertragende Sender von einem statisch festen Empfänger zu einem dynamisch adaptiven System. Hierbei wird die Idee genutzt, mittels eines Signalformers das Antwortsignal eines kontaktlos übertragenden Senders im Antennenfeld der Vorrichtung zu generieren. Dieses durch die analoge Empfangseinheit verfälschte Antwortsignal ermöglicht einen Vergleich mit dem generierten Test-Signalverlaufs, wodurch der Decoder auf einen optimalen Erkennungsgrad eingestellt werden kann.

Vorteilhafte Ausgestaltungen ergeben sich aus den Unteransprüchen.

In einer bevorzugten Ausgestaltung der Erfindung beinhaltet die Kalibriereinheit einen Speicher für typische Signalverläufe des Senders, wobei die Kalibriereinheit mit dem Signalformer verbunden ist. Jeder abgespeicherte Signalverlauf steht dabei für einen unterschiedlichen Sendertypus. So sind beispielsweise im Bereich der Chipkarten durch die ISO 14443 zwei unterschiedliche Typen (Typ A und Typ B) mit unterschiedlichen Sendeprotokollen festgelegt. Der jeweilige für den Typus der Chipkarte charakterisierende Signalverlauf ist in der Kalibriereinheit abgespeichert. Hierdurch ist die automatische Anpassung des Decoders an unterschiedliche Sendertypen möglich.

In einer Ausgestaltung ist die Kalibriereinheit mit einem Signaleingang und mit einem Signalausgang des Decoders verbunden. Hierdurch kann die Kalibriereinheit zur Analyse sowohl den codierten als auch den decodierten Test-Signalverlauf auswerten.

Vorteilhafterweise ist die Kalibriereinheit mit einem mit dem Decoder gekoppelten Parameterregister verbunden. Nach der Analyse eines Test-Signalverlaufes und der Ermittlung der zur Anpassung des Decoders notwendigen Parameterwerte können diese in das Parameterregister geladen werden, auf das der Decoder zurückgreifen kann. Vorteilhafterweise ist das Parameterregister Teil des Decoders.

Weiterhin ist es vorteilhaft, wenn die Kalibriereinheit einen Parameterspeicher aufweist. Hierdurch können die Parameter bei einer iterativen Annäherung an die optimalen Parameter in diesem Speicher zwischengespeichert werden.

Der Signalformer stellt vorteilhafterweise ein elektrisches Ersatzschaltbild des Senders dar, der mit dem Eingang der analogen Empfangseinheit verbunden ist. Bei dem Signalformer handelt es sich somit um ein Ersatzschaltbild der Antenne des Senders. Die Erzeugung des Test-Datensignales findet hingegen in der Kalibriereinheit statt.

Das erfindungsgemäße Verfahren zum Anpassung einer Vorrichtung zum Empfangen digitaler Daten an die Eigenschaften des Senders umfaßt die folgenden Schritte:
a) Bereitstellen eines Test-Signalverlaufes,
b) Einspeisen des Test-Signalverlaufs in die analoge Empfangseinheit,
c) Weitergabe des eventuell verfälschten Signalverlaufs an die Kalibriereinheit,
d) Analyse des eventuell verfälschten Signalverlaufs und Bestimmung von Parameterwerten,
e) Laden der Parameterwerte in das Parameterregister und
f) Gegebenenfalls Wiederholung der Schritte a) bis e).

In einer bevorzugten Ausgestaltung umfaßt das Verfahren den Schritt g), in dem in einer weiteren Abfolge der Schritte a) bis e) ein Vergleich des Ausgangssignales des Decoders mit dem Test-Signalverlauf stattfindet. In einer weiteren bevorzugten Ausgestaltung werden bei einer Abweichung des Ausgangssignales und des Test-Signalverlaufes die Schritte a) bis g) wiederholt.

Vorteilhafterweise wird der Test-Signalverlauf in der Kalibriereinheit gespeichert und dem Signalformer zugeführt, der dann seinerseits den Signaleingang der analogen Empfangseinheit mit dem Test-Signalverlauf beaufschlagt. Der Test-Signalverlauf gibt vorteilhafterweise einen typischen Signalverlauf des Senders wieder. Es können dabei verschiedene Test-Signalverläufe in der Kalibriereinheit oder einer anderen Vorrichtung gespeichert sein.

In einer weiteren Abwandlung des Verfahren ist denkbar, daß der Test-Signalverlauf eine Information zur Änderung des Dämpfungsgrades enthält. Hierdurch kann ein unterschiedlicher Abstand des Senders zu der analogen Empfangseinheit simuliert werden. Eine Änderung des Dämpfungsgrades kann dadurch bewirkt werden, daß die Flanken im Test-Signalverlauf variiert werden. Alternativ könnte in dem Signalformer, der ein Ersatzschaltbild für die Antenne des Senders darstellt, durch Abwandlung der Parameter der Bauteilkomponenten eine Änderung des Dämpfungsgrades simuliert werden.

Für die Analyse des Test-Signalverlaufs in der analogen Empfangseinheit und zur Bestimmung der Parameterwerte kann die Laufzeit des Test-Signalverlaufs in der analogen Empfangseinheit herangezogen werden. Weiterhin ist es denkbar, Überschwinger und die Einschwingzeit des Test-Signalverlaufs zu ermitteln. Zudem kann die Varianz der Signalbreiten und/oder die Varianz der Signalverschiebung für die Analyse herangezogen werden.

Die Erfindung und deren Vorteile werden anhand der nachfolgenden Figuren näher erläutert. Es zeigen:
- Figur 1: eine schematische Darstellung der Vorrichtung zum Empfangen digitaler Daten eines kontaktlos übertragenden Senders und
- Figur 2: einen genaueren Aufbau der Kalibriereinheit aus Figur 1.

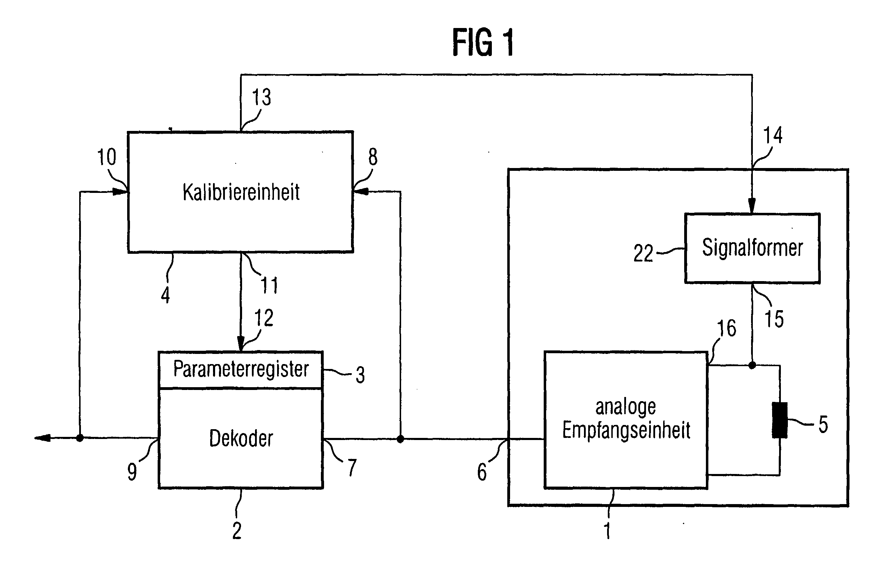

Figur 1 zeigt den schematischen Aufbau der erfindungsgemäßen Vorrichtung zum Empfangen digitaler Daten eines kontaktlos übertragenden Senders. Mit einem Eingang 16 einer analogen Empfangseinheit 1 ist eine Antenne 5 verbunden. Ein Ausgang 6 der analogen Empfangseinheit ist einerseits mit einem Decoder 2 und andererseits mit dem Eingang 8 einer Kalibriereinheit 4 verbunden. Ein Ausgang 9 des Decoders 2 ist mit einem zweiten Eingang 10 der Kalibriereinheit 4 verbunden. Ein erster Ausgang 11 der Kalibriereinheit 4 ist mit einem Parameterregister 3 des Decoders 2 verbunden. Das Parameterregister 3 könnte jedoch auch von dem Decoder 2 separiert ausgeführt sein. Ein zweiter Ausgang 13 der Kalibriereinheit ist mit einem Signalformer 22 verbunden. Ein Ausgang 15 des Signalformers 22 ist mit dem Eingang 16 der analogen Empfangseinheit 1 verbunden.

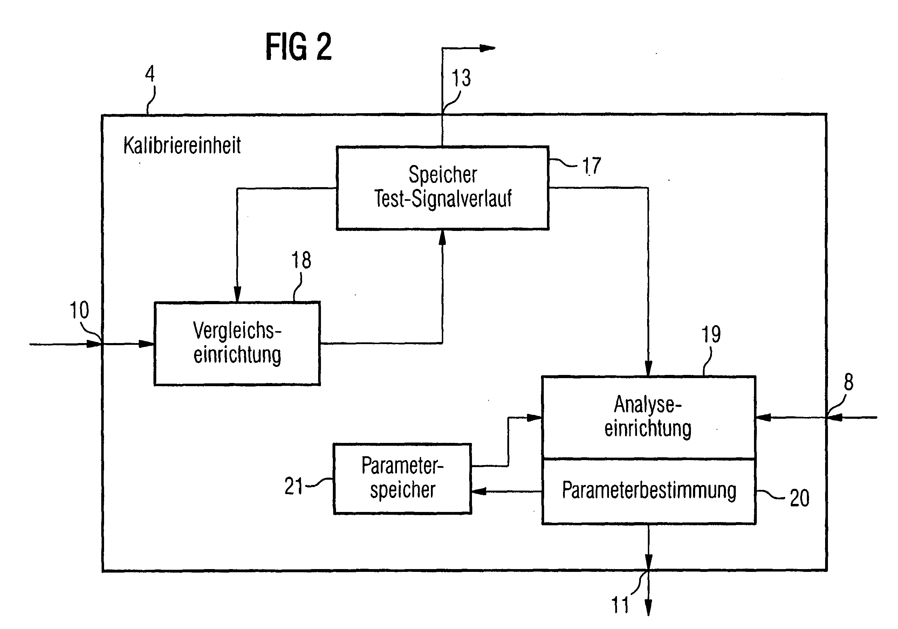

Figur 2 zeigt den genaueren Aufbau der Kalibriereinheit 4 aus Figur 1. Die Kalibriereinheit 4 verfügt über einen Speicher 17, in dem verschiedene Test-Signalverläufe abgelegt sind. Jeder Test-Signalverlauf entspricht einem unterschiedlichen Sender. Der Test-Signalverlauf entspricht dabei einem Antwortsignal des Senders, wie er es unter realen Bedingungen an die Vorrichtung zum Empfangen digitaler Daten übermitteln würde. Dieser Test-Signalverlauf wird über den zweiten Ausgang 13 dem Signalformer 22 zugeführt, welcher ein Ersatzschaltbild für die Antenne des Senders darstellt. Diese könnte beispielsweise aus zwei Kondensatoren und einer Spule bestehen. Der Signalformer 22 speist dieses entsprechend der Antenneneigenschaften geänderte Signal in den Eingang 16 der analogen Empfangseinheit 1 ein. Die analoge Empfangseinheit 1 verfälscht durch Filter und Verstärker den Test-Signalverlauf und gibt diesen an seinem Ausgang 6 an den Decoder 2 sowie die Kalibriereinheit 4 weiter. Die Kalibriereinheit 4 verfügt über eine Analyseeinrichtung 19, die mit dem ersten Eingang 8 der Kalibriereinheit verbunden ist. In der Kalibriereinheit 4 wird das von der analogen Empfangseinheit gelieferte Ausgangssignal mit dem Test-Signalverlauf verglichen. Hierzu wird der Test-Signalverlauf vom Speicher 17 an die Analyseeinrichtung 19 übertragen.

Die Analyse des verfälschten beziehungsweise eventuell verfälschten Test-Signalverlaufs umfaßt die Bestimmung der Filterlaufzeit der analogen Empfangseinheit, einen Vergleich der Anzahl der Signalspitzen zur Bestimmung von Überschwingern oder der Einschwingzeit der Filter, den Vergleich der Breiten der Signalspitzen zur Bestimmung der Varianz in den Signalbreiten sowie die Lage der Spitzen im Vergleich zu dem Test-Signalverlauf, wodurch die Varianz der Signalverschiebung ermittelt werden kann. Hieraus werden Parameter bestimmt, mit denen der Decoder an die analoge Empfangseinheit und/oder die Eigenschaften des Senders anpaßbar ist. Um den Decoder an die Eigenschaften der analogen Empfangseinheit anzupassen, werden die ermittelten Parameter zum einen in einem Parameterspeicher 21 in der Kalibriereinheit 4 abgelegt und andererseits über den ersten Ausgang 11 an das Parameterregister 3 weitergegeben.

Durch einen weiteren Test-Signalverlauf wird die eingestellte Güte des Decoders überprüft. Dies bedeutet, ein identischer Test-Signalverlauf wird von dem Speicher 17 der Kalibriereinheit 4 an den Signalformer 22 übertragen. Die analoge Empfangseinheit verfälscht den Test-Signalverlauf und führt diesen wiederum der Kalibriereinheit 4 und dem Decoder 2 zu. Der decodierte Test-Signalverlauf wird über den zweiten Eingang 10 einer Vergleichseinrichtung 18 der Kalibriereinheit 4 zugeführt, wobei dieser decodierte Test-Signalverlauf mit dem vom Speicher versendeten Test-Signalverlauf verglichen wird. Bei guter Übereinstimmung ist der Decoder durch die ermittelten Parameterwerte gut an die Eigenschaften der analogen Empfangseinheit angepaßt worden. Stellt die Vergleichseinrichtung nach wie vor große Unterschiede zwischen dem decodierten Test-Signalverlauf und dem im Speicher liegenden Test-Signalverlauf fest, wird ein weiterer Durchlauf gestartet. Diese iterative Testsequenz wird solange durchlaufen, bis das decodierte Test-Datensignal mit dem im Speicher abgelegten Test-Signalverlauf annähernd übereinstimmt. Bei den iterativen Testsequenzen können dabei die im vorherigen Durchlauf ermittelten Parameter aus dem Parameterspeicher 21 abgerufen und zur Analyse herangezogen werden. Jedoch werden mit jeder neuen Testsequenz neue Parameterwerte von der Analyseeinrichtung 19 bestimmt, die sowohl dem Parameterspeicher 21 als auch dem Parameterregister 3 des Decoders zur Verfügung gestellt werden.

Als Test-Datensignal können beispielsweise zwei Bits im sogenannten Manchester-Code gesendet werden. In diesem digital erzeugten Signal sind alle Signalspitzen gleich lang und besitzen dieselbe Länge. Soll der Dämpfungsgrad der Ersatzschaltung simuliert werden, so kann entweder ein zusätzliches Signal an den Signalformer 22 übermittelt werden, mit denen die Eigenschaften des Signalformers veränderbar sind oder aber es können die Flanken der Bits des Manchester-Codes variiert werden. Hierdurch ist es möglich, verschiedene Abstände zwischen dem Sender und der analogen Empfangseinheit zu simulieren.

Die Erfindung beruht auf dem Prinzip, daß durch die Ermittlung von Parametern für den Decoder aufgrund bekannter Test-Signalverläufe Signallaufzeiten und -verschiebungen der analogen Empfangseinheit bekannt sind, so daß der Decoder diese Informationen beim Decodieren nutzen kann. Hierdurch wird eine gegenüber dem Stand der Technik wesentlich höhere Decodierrate erzielt.

Die Erfindung wandelt eine Vorrichtung zum Empfangen digitaler Daten eines kontaktlos übertragenden Senders vom statisch festen Empfänger zum dynamisch adaptiven System. Hierbei wird durch eine elektrische Ersatzschaltung das Übertragungssignal eines Senders im Antennenfeld der Vorrichtung generiert, wodurch Parameterwerte für den Decoder ermittelt werden können, durch die er Signallaufzeiten und - Signalverschiebungen der analogen Empfangseinheiten beim Decodieren berücksichtigen kann.

Die Parameter können sowohl bei einem Neustart der Vorrichtung als auch während des Betriebes ermittelt werden. Hiermit ist es beispielsweise möglich, Schwankungen von Bauelementparametern der analogen Empfangseinheit zum Beispiel aufgrund Temperaturschwankungen auszugleichen. Soll das Lesegerät auf einen anderen Typ von Sender umgestellt werden, können beispielsweise bereits ermittelte Parameter aus dem Parameterspeicher der Kalibriereinheit abgerufen und in das Parameterregister des Decoders geladen werden. Sind die Parameterwerte eines Senders noch nicht in den Parameterspeicher enthalten, so werden diese in der beschriebenen Weise ermittelt und dort abgelegt.

Die Verwendung eines Signalformers ist nicht unbedingt notwendig. Beispielsweise könnte der Test-Signalverlauf bereits in dem Speicher der Kalibriereinheit entsprechend der Eigenschaften der Antenne des Senders variiert werden. In diesem Falle wäre ein direktes Einspeisen des Test-Signalverlaufes in die analoge Empfangseinheit denkbar.

### Bezugszeichenliste

- 1: Analoge Empfangseinheit
- 2: Decoder
- 3: Parameterregister
- 4: Kalibriereinheit
- 5: Antenne
- 6: Ausgang analoge Empfangseinheit
- 7: erster Eingang Decoder
- 8: erster Eingang Kalibriereinheit
- 9: Ausgang Decoder
- 10: zweiter Eingang Kalibriereinheit
- 11: erster Ausgang Kalibriereinheit
- 12: zweiter Eingang Decoder
- 13: zweiter Ausgang Kalibriereinheit
- 14: Eingang analoge Empfangseinheit
- 15: Ausgang Signalformer
- 16: Eingang analoge Empfangseinheit
- 17: Speicher
- 18: Vergleichseinrichtung
- 19: Analyseeinrichtung
- 20: Parameterbestimmung
- 21: Parameterspeicher
- 22: Signalformer

## Patentansprüche

1. Vorrichtung zum Empfangen digitaler Daten eines kontaktlos übertragenden Senders mit einer analogen Empfangseinheit (1) und einem der analogen Empfangseinheit (1) nachgeschalteten Decoder (2),
**dadurch gekennzeichnet, daß**
ein Signalformer (22) zum Beaufschlagen der analogen Empfangseinheit (1) mit einem Test-Signalverlauf vorgesehen ist und daß eine Kalibriereinheit (4) zur Abgabe des Test-Signalverlaufs vorgesehen ist, die abhängig von dem von der analogen Empfangseinheit (1) erzeugten Signal Parameter bestimmt, mit denen der Decoder (2) an die analoge Empfangseinheit (1) und/oder den Sender anpaßbar ist.

2. Vorrichtung nach Anspruch 1,
**dadurch gekennzeichnet, daß**
die Kalibriereinheit (4) einen Speicher (17) für typische Signalverläufe des Senders beinhaltet, der mit dem Signalformer (22) verbunden ist.

3. Vorrichtung nach Anspruch 1 oder 2,
**dadurch gekennzeichnet, daß**
die Kalibriereinheit (4) mit einem Signaleingang (7) und einem Signalausgang (9) des Decoders (2) verbunden ist.

4. Vorrichtung nach einem der Ansprüche 1 bis 3,
**dadurch gekennzeichnet, daß**
die Kalibriereinheit (4) mit einem mit dem Decoder (2) gekoppelten Parameterregister (3) verbunden ist.

5. Vorrichtung nach einem der Ansprüche 1 bis 4,
**dadurch gekennzeichnet, daß**
das Parameterregister (3) Teil des Decoders (2) ist.

6. Vorrichtung nach einem der Ansprüche 1 bis 5,
**dadurch gekennzeichnet, daß**
die Kalibriereinheit (4) einen Parameterspeicher (21) aufweist.

7. Vorrichtung nach einem der Ansprüche 1 bis 6,
**dadurch gekennzeichnet, daß**
der Signalformer (22) ein elektrisches Ersatzschaltbild des Senders darstellt, der mit dem Eingang der analogen Empfangseinheit (1) verbunden ist.

8. Verfahren zum Anpassen einer Vorrichtung zum Empfangen digitaler Daten mit einer analogen Empfangseinheit (1) und einem der analogen Empfangseinheit nachgeschalteten Decoder (2) an die Eigenschaften eines Senders mit den folgenden Schritten:
a) Bereitstellen eines Test-Signalverlaufs durch eine Kalibriereinheit (4),
b) Einspeisen des Test-Signalverlaufs in die analoge Empfangseinheit (1),
c) Weitergabe des eventuell verfälschten Signalverlaufs an die Kalibriereinheit (4),
d) Analyse des eventuell verfälschten Signalverlaufs und Bestimmung von Parameterwerten,
e) Laden der Parameterwerte in ein Parameterregisteri zur Anpassung des Decoders (2) an die analoge Empfangseinheit (1) und/oder des Senders und
f) Gegebenenfalls Wiederholung der Schritte a) bis e).

9. Verfahren nach Anspruch 8,
**dadurch gekennzeichnet, daß** als Schritt g)
in einer weiteren Abfolge der Schritte a) bis e) ein Vergleich des Ausgangssignal des Decoders (2) mit dem Test-Signalverlauf stattfindet.

10. Verfahren nach Anspruch 9,
**dadurch gekennzeichnet**,
bei einer Abweichung des Ausgangssignals und des Test-Signalverlaufs die Schritte a) bis g) wiederholt werden.

11. Verfahren nach einem der Ansprüche 8 bis 10,
**dadurch gekennzeichnet, daß**
der Test-Signalverlauf einen typischen Signalverlauf eines Senders wiedergibt.

12. Verfahren nach einem der Ansprüche 8 bis 11,
**dadurch gekennzeichnet, daß**
der Test-Signalverlauf in der Kalibriereinheit (4) gespeichert ist und einem Signalformer (22) zugeführt wird, der seinerseits den Signaleingang der analogen Empfangseinheit (1) mit dem Test-Signalverlauf beaufschlagt.

13. Verfahren nach einem der Ansprüche 8 bis 12,
**dadurch gekennzeichnet, daß**
der Test-Signalverlauf eine Information zur Änderung des Dämpfungsgrades enthält.

14. Verfahren nach einem der Ansprüche 8 bis 13,
**dadurch gekennzeichnet, daß**
zur Analyse des Signalverlaufs in der analogen Empfangseinheit und zur Bestimmung der Parameterwerte ermittelt werden:
a) die Laufzeit in der analogen Empfangseinheit und/oder
b) Überschwinger und Einschwingzeit und/oder
c) Varianz der Signalbreiten und/oder
d) Varianz der Signalverschiebung.

## Claims

1. Apparatus for receiving digital data from a transmitter that transmits without contact, comprising an analog receiving unit (1) and a decoder (2) connected downstream of the analog receiving unit (1), **characterized in that** a signal former (22) is provided to apply a test signal profile to the analog receiving unit (1), and **in that** a calibration unit (4) is provided to emit the test signal profile which calibration unit, on the basis of the signal generated by the analog receiving unit (1), determines parameters with which the decoder (2) can be matched to the analog receiving unit (1) and/or the transmitter.

2. Apparatus according to claim 1, **characterized in that** the calibration unit (4) contains a memory (17) for typical signal profiles of the transmitter, which is connected to the signal former (22).

3. Apparatus according to claim 1 or 2, **characterized in that** the calibration unit (4) is connected to a signal input (7) and a signal output (9) of the decoder (2).

4. Apparatus according to one of claims 1 to 3, **characterized in that** the calibration unit (4) is connected to a parameter register (3) coupled to the decoder (2).

5. Apparatus according to one of claims 1 to 4, **characterized in that** the parameter register (3) is part of the decoder (2).

6. Apparatus according to one of claims 1 to 5, **characterized in that** the calibration unit (4) has a parameter memory (21).

7. Apparatus according to one of claims 1 to 6, **characterized in that** the signal former (22) constitutes an electrical equivalent circuit of the transmitter, which is connected to the input of the analog receiving unit (1).

8. Method of matching an apparatus for receiving digital data, comprising an analog receiving unit (1) and a decoder (2) connected downstream of the analog receiving unit, to the characteristics of a transmitter, having the following steps:
a) providing a test signal profile by a calibration unit (4),
b) feeding the test signal profile into the analog receiving unit (1),
c) forwarding the possibly distorted signal profile to the calibration unit (4),
d) analyzing the possibly distorted signal profile and determining parameter values,
e) loading the parameter values into a parameter register to match the decoder (2) to the analog receiving unit (1) and/or the transmitter, and
f) if necessary, repeating steps a) to e).

9. Method according to claim 8, **characterized in that**, as step g), in a further sequence of steps a) to e), a comparison between the output signal of the decoder (2) and the test signal profile is carried out.

10. Method according to claim 9, **characterized in that**, in the event of a deviation between the output signal and the test signal profile, steps a) to g) are repeated.

11. Method according to one of claims 8 to 10, **characterized in that** the test signal profile reproduces a typical signal profile of a transmitter.

12. Method according to one of claims 8 to 11, **characterized in that** the test signal profile is stored in the calibration unit (4) and supplied to a signal former (22) which, for its part, applies the test signal profile to the signal input of the analog receiving unit (1).

13. Method according to one of claims 8 to 12, **characterized in that** the test signal profile contains an item of information for changing the level of attenuation.

14. Method according to one of claims 8 to 13, **characterized in that**, to analyze the signal profile in the analog receiving unit, and to determine the parameter values, the following are determined:
a) the propagation time in the analog receiving unit and/or
b) overswings and initial transient time and/or
c) the variance of the signal widths and/or
d) the variance of the signal shift.

## Revendications

1. Dispositif pour la réception de données numériques d'un émetteur transmettant sans contact avec une unité de réception analogique (1) et avec un décodeur (2) branché du côté aval de l'unité de réception analogique (1),
**caractérisé par le fait qu'**il est prévu un dispositif de mise en forme de signal (22) pour alimenter l'unité de réception analogique (1) avec une allure de signal de test et qu'il est prévu pour la délivrance de l'allure de signal de test une unité de calibrage (4) qui détermine, en fonction du signal produit par l'unité de réception analogique (1), des paramètres avec lesquels le décodeur (2) est adaptable à l'unité de réception analogique (1) et/ou à l'émetteur.

2. Dispositif selon la revendication 1,
**caractérisé par le fait que** l'unité de calibrage (4) contient une mémoire (17) qui est destinée à des allures de signal typiques de l'émetteur et qui est reliée au dispositif de mise en forme de signal (22).

3. Dispositif selon la revendication 1 ou 2,
**caractérisé par le fait que** l'unité de calibrage (4) est reliée à une entrée de signal (7) et à une sortie de signal (9) du décodeur (2).

4. Dispositif selon l'une des revendications 1 à 3,
**caractérisé par le fait que** l'unité de calibrage (4) est reliée à un registre de paramètres (3) couplé au décodeur (2).

5. Dispositif selon l'une des revendications 1 à 4,
**caractérisé par le fait que** le registre de paramètres (3) fait partie du décodeur (2).

6. Dispositif selon l'une des revendications 1 à 5,
**caractérisé par le fait que** l'unité de calibrage (4) comporte une mémoire de paramètres (21).

7. Dispositif selon l'une des revendications 1 à 6,
**caractérisé par le fait que** le dispositif de mise en forme de signal (22) représente un schéma électrique équivalent de l'émetteur qui est relié à l'entrée de l'unité de réception analogique (1).

8. Procédé pour l'adaptation d'un dispositif, destiné à la réception de données numériques et comportant une unité de réception analogique (1) et un décodeur (2) branché du côté aval de l'unité de réception analogique, aux propriétés d'un émetteur, avec les étapes suivantes :
a) préparation d'une allure de signal de test par une unité de calibrage (4),
b) introduction de l'allure de signal de test dans l'unité de réception analogique (1),
c) retransmission de l'allure de signal de test éventuellement déformée à l'unité de calibrage (4),
d) analyse de l'allure de signal éventuellement déformée et détermination de valeurs de paramètres,
e) chargement des valeurs de paramètres dans un registre de paramètres pour l'adaptation du décodeur (2) à l'unité de réception analogique (1) et/ou à l'émetteur, et
f) éventuellement, répétition des étapes a) à e).

9. Procédé selon la revendication 8,
**caractérisé par le fait que**, comme étape g), une comparaison du signal de sortie du décodeur (2) à l'allure de signal de test a lieu dans une autre séquence des étapes a) à e).

10. Procédé selon la revendication 9,
**caractérisé par le fait que** les étapes a) à g) sont répétées lorsqu'il y a un écart entre le signal de sortie et l'allure de signal de test.

11. Procédé selon l'une des revendications 8 à 10,
**caractérisé par le fait que** l'allure de signal de test reproduit une allure de signal typique d'un émetteur.

12. Procédé selon l'une des revendications 8 à 11,
**caractérisé par le fait que** l'allure de signal de test est mémorisée dans l'unité de calibrage (4) et est envoyée à un dispositif de mise en forme de signal (22) qui alimente pour sa part l'entrée de signal de l'unité de réception analogique (1) avec l'allure de signal de test.

13. Procédé selon l'une des revendications 8 à 12,
**caractérisé par le fait que** l'allure de signal de test contient une information pour la modification du taux d'affaiblissement.

14. Procédé selon l'une des revendications 8 à 13,
**caractérisé par le fait que**, pour l'analyse de l'allure de signal dans l'unité de réception analogique et pour la détermination des valeurs de paramètres, on détermine :
a) le temps de propagation dans l'unité de réception analogique et/ou
b) les oscillations parasites et le régime transitoire et/ou
c) la variance des largeurs de signal et/ou
d) la variance du décalage de signal.
